# EUROPEAN PATENT APPLICATION

(11) **EP 2 284 036 A2**
(43) Date of publication of application: **16.02.2011**
(21) Application number: 09733527.7
(22) Date of filing: 20.04.2009
(51) Int. Cl.: B60L 11/16

(54) **POWER GENERATOR USING LOAD APPLIED TO TIRE**

(30) Priority: 18.04.2008 KR 20080035845
(71) Applicant: Kim, Jae Seok, Kyungsangnamdo 650-804 (KR)
(72) Inventor: Kim, Jae Seok, Kyungsangnamdo 650-804 (KR)
(74) Representative: Beetz & Partner
(86) International application number: PCT/KR2009/002050
(87) International publication number: WO 2009/128690

(57) **Abstract**

The present invention concerns a power generator using weight applied to a tire. More specifically, a drive gear inside a hydraulic driving apparatus is connected to a rotary shaft of the power generator and rotates using hydraulic pressure generated in a compartment by a load applied to a tire. Thus, this invention leads the current generated in the power generator connected to the drive gear. The disclosed power generator comprises a plurality of compartments which respectively have flexible diaphragms and house liquid between the outer circumference of the wheel and the inner circumference of the tire. In the tire, the diaphragms are diagonally or horizontally placed in relation to the moving direction of the tire. Each compartment comprises two hoses whereof one is for ejecting internal liquid into the hydraulic driving apparatus and the other is for suctioning the liquid from the hydraulic driving apparatus into the compartment. The housing of the hydraulic driving apparatus is installed in the power generator which is installed inside the wheel. The liquid ejected from the ejection hose rotates the drive gear in the opposite way of tire rotation and the shaft of the drive gear transmits the torque to a rotor shaft of the power generator. In summary, the present invention comprises the power generator with the rotor capable of generating electricity and an electricity-leading unit which leads the electricity generated in the rotor of the power generator.

## Description

### [Technical Field]

The present invention relates to a power generator using load applied to a tire, in more detail a power generator using load applied to a tire which is designed to rotate a drive gear by using hydraulic pressure generated by load applied from a vehicle to the tire in traveling and lead current generated by the generator by using torque of the drive gear.

### [Background Art]

Vehicles are necessities in the modern society, but have various problems, such as environment pollution due to using fossil fuels and energy exhaustion, such that there have been various studies in developing electric vehicles to solve the problems.

For electric vehicles, electric vehicles of the related art use electric energy supplied from the outside, such as charging stations, and have difficult in recharging in traveling, while the electric energy supplied from the charging stations is also generated from fuel, such as fire and atomic energy, such that the electric vehicles are still inefficient in terms of energy.

There has been a study for using energy more efficiently by recharging with electric energy generated from gravity energy applied to tires and recycling energy due to the internal energy of the tires in traveling, for recharging with electric energy in traveling, regardless of energy supplied for traveling, in consideration of the problems.

A technology for recharging in traveling has been disclosed in "Power Generator Using Vehicle Load Applied to Tire" (Korean Patent Application No.10-2002-0032416) by the applicant(s)" in which the driving apparatus for generating power is disposed between a rotator and the inner circumference of a wheel, such that rotational resistance increases in order to prevent fluid from leaking, while the fluid may flow into the power generator when the tire is shocked from a tough road surface.

Further, since an inner rotator of the power generator fitted on the axle, the tire rotating opposite to the tire for generating electricity interferes with operation of the axle, such that fatigue of the tire is increased by forming compartments or riding comfort is reduced by mounting a diaphragm perpendicular to the wheel, in the tire.

### [Disclosure]

### [Technical Problem]

In order to solve the problems, it is an object of the present invention to provide a power generator using load applied to a tire that has high energy efficiency increased by converting mechanical energy into electric energy, and removes the problems in the related art, such as interference in rotation of an axle due to power generation, inflow of vehicle to the power generator, increase in fatigue of a tire due to diaphragms, and reduction of riding comfort.

### [Technical Solution]

In a power generator using load applied to a tire according to the present invention, diaphragms are formed diagonally to a moving direction of a tire and compartment is formed to separate fluid between the outer circumference of a wheel and the diaphragms, in the tire, and the compartments are each equipped with a hydraulic ejection hose ejecting fluid into a hydraulic driving apparatus and hydraulic suction hose sucking the fluid from the hydraulic driving apparatus into the compartments.

The hydraulic hoses are connected to the wheel corresponding to the compartments and a housing of the hydraulic driving apparatus, the hydraulic driving apparatus includes a driving gear generating torque while rotating opposite to the tire by means of the fluid ejected through the hydraulic ejection hoses, and a driving shaft extends from the center of the driving gear to transmit the torque from the driving gear to an electricity generator.

Further, the power generator includes the hydraulic driving apparatus including driven gears engaged with the driving gear to concentrate ejection force of the fluid therein, an electricity generator housing equipped with a field coil and mounted inside the wheel, an electricity generator generating electricity while rotating in the opposite direction to the tire by means of the driving shaft at the center of the electricity generator housing, and an electricity-leading unit leading electricity generated from a rotator of the electricity generator.

Further, in order to lead direct current from the electricity generator, an axle having a hole 341 through the center such that the driving shaft can pass is disposed in the center of the wheel, the driving shaft extends outward through the wheel and the axle, and the electricity-leading unit further includes a housing fixed to the chassis, a terminal formed on the outer circumference of the housing to lead electricity, a rectifier fixed to the driving shaft in the housing, and a brush connected to the terminal and grounded to the rectifier.

Further, the power generator further includes a field coil grounding unit that includes a housing fixed to the chassis while covering the outer circumference of the axle, a terminal formed on the outer circumference of the housing to supply exciting current, a slip ring fixed to the axle in the housing, and a brush connected to with the terminal and grounded to the flip ring, in order to supply exciting current to the field coil.

Further, in order to lead alternating current from the electricity generator, an axle having a hole through the center such that the driving shaft can pass is disposed in the center of the wheel, the driving shaft extends outward through the wheel and the axle, and the electricity-leading unit further includes a housing fixed to the chassis, a terminal formed on the outer circumference of the housing to lead electricity, a slip ring fixed to the driving shaft in the housing, and a brush connected to the terminal and grounded to the slip ring.

Further, the power generator further includes a field coil grounding unit that includes a housing fixed to the chassis while covering the outer circumference of the axle, a terminal formed on the outer circumference of the housing to supply exciting current, a rectifier fixed to the axle in the housing, and a brush connected to with the terminal and grounded to the rectifier, in order to supply exciting current to the field coil.

### [Advantageous Effects]

The power generator using load applied to a tire according to the present invention can generate electric energy without additional loss of electricity that is consumed to drive a vehicle, such that it is possible to increase energy efficiency in comparison to electric vehicles of the related art, and also possible to solve environmental problems by generating electricity by using mechanical energy.

Further, it is possible to prevent fluid from flowing into the power generator, prevent interference with driving the tire due to generation of electricity by separating the axle from the driving shaft of the electricity generator, which are problems of the relted art, and provide drivers with pleasant riding comfort. Further, it is possible to prevent the tire from being damaged by diaphragms, when using tube-shaped compartments.

### [Brief Description of Drawings]

FIG. 1 is a side cross-sectional view showing an embodiment of the inside of a tire and a hydraulic driving apparatus of a power generator using load applied to a tire according to the present invention;
FIG. 2 is a front cross-sectional view showing an embodiment of the inside of the hydraulic driving apparatus and an electric generator of the power generator using load applied to a tire according to the present invention;
FIG. 3 is a perspective view showing an embodiment of a diaphragm formed perpendicular to a wheel in a compartment structure of a power generator using load applied to a tire of the related art;
FIG. 4 is a perspective view showing an embodiment of a diaphragm formed diagonally to a wheel in a compartment structure of the power generator using load applied to a tire according to the present invention;
FIG. 5 is a side cross-sectional view showing an embodiment of an electricity-leading unit and a field coil grounding unit of the power generator using load applied to a tire according to the present invention;
FIG. 6 is a side cross-sectional view showing an embodiment of an electricity-leading unit for leading direct current and a field coil grounding unit of the power generator using load applied to a tire according to the present invention; and
FIG. 7 is a side cross-sectional view showing an embodiment of an electricity-leading unit for leading alternating current and a field coil grounding unit of the power generator using load applied to a tire according to the present invention.

### <Reference Numerals>

10 : Tire 20 : Wheel 110 : Diaphram 120 : Compartment 130 : Hydraulic ejection hose 140 : Hydraulic suction hose 200 : Hydraulic driving apparatus 210 : Hosing of hydraulic driving apparatus 220 : Driving gear 230 : Driving shaft 240 : Driven shaft 300 : Electricity generator 310 : Electricity generator housing 320 : Field coil 330 : Rotator 340 : Axle 341 : Hole 400 : Electricity-leading unit 410 : Hosing of electricity-leading unit 421 : Rectifier 422 : Brush 423 : Slip ring 424 : Brush 430 : Terminal 500 : Field coil grounding unit 510 : Hosing of field coil grounding unit 521 : Slip ring 522 : Brush 523 : Rectifier 524 : Brush 530 : Terminal 600 : Capacitor

### [Mode for Invention]

Preferred embodiments of the present invention are described in detail with reference to the accompanying drawings.

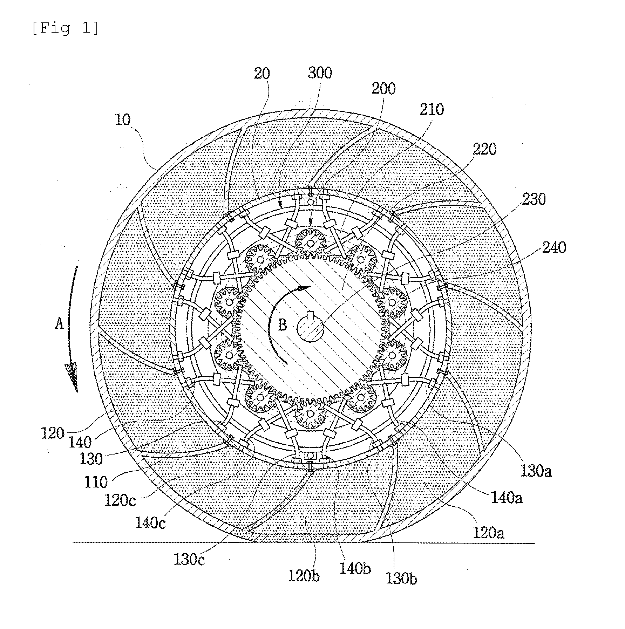

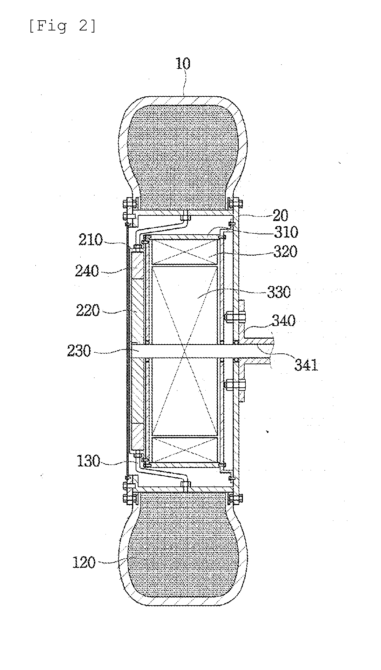

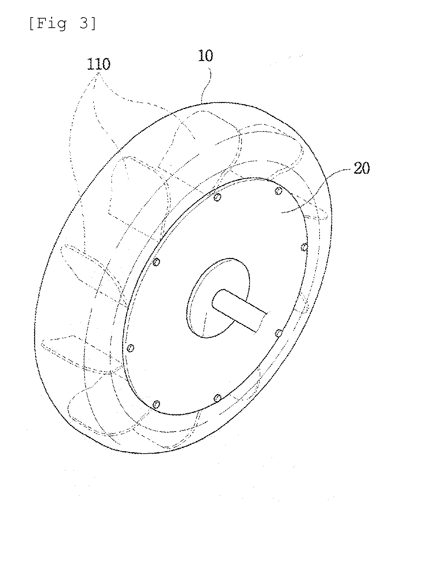

FIG. 1 is a side cross-sectional view showing an embodiment of the inside of a tire and a hydraulic driving apparatus of a power generator using load applied to a tire according to the present invention, FIG. 2 is a front cross-sectional view showing an embodiment of the inside of the hydraulic driving apparatus and an electric generator of the power generator using load applied to a tire according to the present invention, and FIG. 3 is a perspective view showing an embodiment of a diaphragm formed perpendicular to the moving direction of a tire in a compartment structure of a power generator using load applied to a tire of the related art. As shown in the figures, the present invention is largely composed of a tire 10, hydraulic hoses transmitting hydraulic pressure, a hydraulic driving apparatus 200 that is mounted inside a wheel 20 and generates torque, using the hydraulic pressure, an electric generator 300 that generates electricity, using the torque, and an electricity-leading unit.

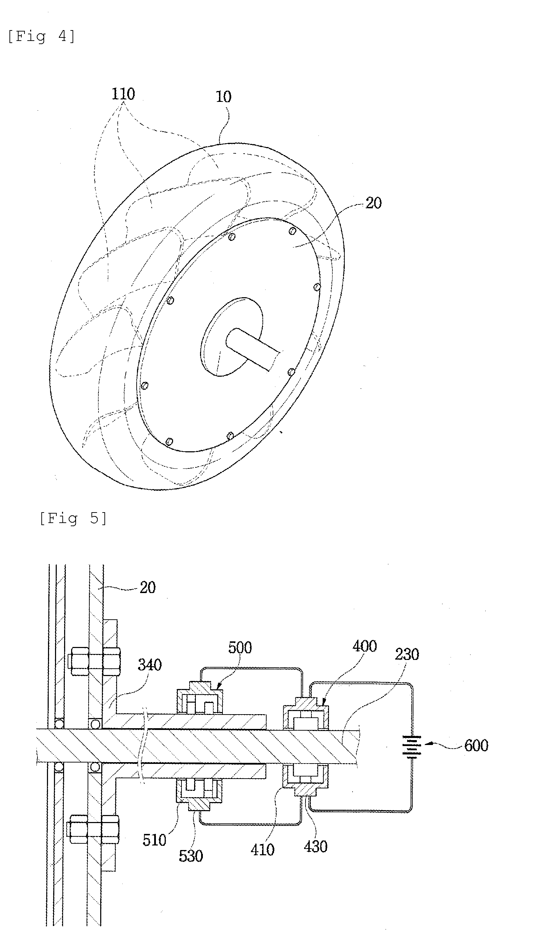

As shown in FIG. 4, diaphragms 110 are formed diagonally to the moving direction of the tire in the tire 10 and compartments 120 that separately house fluid are defined between the diaphragms 110. Though not shown in FIG. 4, hydraulic ejection hoses 130 for ejecting fluid from the inside of the compartments 120 into the hydraulic driving apparatus 200 and hydraulic suction hoses 140 for sucking the fluid from the hydraulic driving apparatus 200 into the compartments are mounted in this structure, in which the hydraulic hoses are connected to the wheel 20 for the compartments and a housing 210 of the hydraulic driving apparatus 210.

As shown in FIGS. 1 and 2, the hydraulic driving apparatus 200 is fixed inside the wheel 20 and includes a housing 210 fixed to the electric generator 300 and a driving gear 220 generating torque while rotating opposite to the tire by means of fluid ejected from the hydraulic ejection hoses 130 at the center in the housing 210, in which a driving shaft 230 extends from the center of the driving gear to transmit the torque from the driving gear to the electric generator 300 and driven gears 240 are engaged with the driving gear 220 to efficiently transmit force from the fluid.

Further, the connecting portion with the wheel of the hydraulic hose 130 shown in FIG. 2 is positioned at the center portion of the outer circumference of the wheel, but this is for convenience in understanding, and it is preferable to move the connecting portion to the left in the figure in consideration of interference in flow of fluid in actual manufacturing and it is preferable that the hydraulic hose is made of a flexible material.

Further, the electric generator is mounted inside the wheel 20 while separating from the axle and includes an electric generator housing 310 fixed to the wheel 20 and a field coil 320 fixed to the housing and generating electric force while rotating in the same direction as the tire, in which a rotator 330 generating electricity while rotating in the opposite direction to the tire by means of the driving shaft 230 is positioned at the center of the housing 310.

The operation of the power generator using load applied to a tire according to the present invention is described hereafter.

As the compartments, hydraulic hoses, and hydraulic driving apparatus 200 are filled with an appropriate amount of fluid and the tire 10 is rotated in the direction A, with load applied from the chassis" the first compartment 120a, the second compartment 120b, and the third compartment 120 are sequentially and temporarily compressed by the vehicle load and then restored. In this operation, the fluid in the second compartment 120b, which is compressed, is ejected between the driving gear 220 and the driven gears 240, which are engaged with each other, through the hydraulic ejection hose 130b having a check valve function ejecting fluid only toward the hydraulic driving apparatus 200, while the first compartment 120a, which is restored, sucks some of the fluid from the hydraulic driving apparatus 200 through the hydraulic suction hose 140a having a check valve function, which ejects fluid only toward the compartment 120, by the increased pressure inside the hydraulic driving apparatus 200 and the pressure inside the first compartment 120 which is decreased by restoration of the tire. As the fluid is ejected between the driving gear 220 and the driven gears 240, the driving gear and the drive gears rotate and the driving shaft 230 fitted in the center of the driving gear by a key rotate, and accordingly, the rotator of the electric generator rotates opposite to the rotational direction of the electric generator housing 310 fastened to the wheel 20, thereby generating electricity. In this operation, the kinetic energy for rotation of the driving gear 220 is converted from gravity energy applied to the fluid in the compartments by the vehicle load, as described above; therefore, according to the present invention, it is possible to generate electricity while sequentially converting the gravity energy into kinetic energy and the kinetic energy and electric energy, without additionally consuming energy for driving the vehicle.

Although a gear pump type is applied to the hydraulic driving apparatus 200 in the present invention, other types known in the art, such as a turbine type and a vein type, may be used; however, it is preferable to manufacture the driving gear and the driven gears in a size as similar as possible in terms of transmission of the force from the fluid, when using the gear pump type.

As shown in FIG. 2, the hydraulic driving apparatus 200 and the electric generator 300 disposed inside the wheel 20 are separated by the housings 210, 310. This is for rotating the rotator 330 only by separating the fluid from the driving gear 220 rotating opposite to the rotational direction of the wheel 20 by means of the fluid in separate housings and extending the driving shaft 230, because the rotational direction of the fluid is opposite to the rotational direction of the field coil 320 when the fluid flows into the electric generator 330 and this may interfere with the rotation of the wheel 20. Accordingly, the field coil 320 and the rotator 330 can smoothly rotate in the opposite directions, without friction, in the electric generator 300. Therefore, the housing 210 of the hydraulic driving apparatus, the electric generator housing 310, and the field coil 320 rotate about the axle 340 extending from the wheel 20 in the same direction as the tire 10, whereas the driving gear 220 and the driven gears 330 rotate about the driving shaft 230 in the opposite direction to the tire 10; therefore, it is possible to achieve high electromotive force with magnetic flux change faster than common electric generators composed of a stator and a rotator rotating inside the stator.

A means for minimize friction and keep hermetic, such as an hermetic bearing, may be disposed at predetermined positions such that the driving gear 220 and the driven gears 240, the driving shaft 230 and the housing 210 of the hydraulic driving apparatus, and the electric generator housing 310 and the field coil 320 and the rotator 330 can smoothly rotate in the opposite directions, respectively.

Further, although the compartment 120 separates the fluid by using the inner wall of the tire, the diaphragms 110, and the outer wall of the wheel, as shown in FIGS. 1 and 2, connecting portions between the hydraulic ejection hoses and the hydraulic suction hoses are made of a hermetic material, instead of the diaphragm 110, and a plurality of tubes having the shape of the compartment 120 and filled with fluid may be disposed to be used as the compartments.

Describing in detail the outer shape of the tube-shaped compartment, the outer structure of the tube-shaped compartment may be constructed by connection points at the center of the width of the diaphragms 110 formed horizontally or diagonally to the moving direction of the tire, connection points on the outer circumference of the wheel 20, and connection points on the inner wall of the tire.

Further, the tube-shaped compartment has the advantage of preventing the tire from being damaged due to the diaphragm and relatively simply keeping the compartment hermetic, as compared with the compartment defined by the diaphragms 110.

FIG. 5 is a side cross-sectional view showing an embodiment of an electricity-leading unit and a field coil grounding unit of the power generator using load applied to a tire according to the present invention. Although a variety of well-known means may be use to lead electricity by being slip-grounding from the rotator, as an electricity-leading means, according to a preferable embodiment, an electricity-leading means 400 may be fitted on the outer circumference of the extending portion of the driving shaft, as described above. Further, some of the led electricity can be supplied for the exciting current of the field coil, and for this configuration, other than various types of grounding known in the art, it may be possible to fitting a field coil grounding unit 500 on the outer circumference of the axle 340.

As shown in the figure, the field coil grounding unit 500 covers the outer circumference of the axle 340 extending from the wheel 20, while the electricity-leading unit 400 covers the outer circumference of the driving shaft 230 extending outward through the hole 314 of the axle from the driving gear 220. Though not shown in detail, a lead wire of the field coil 320 may be embedded between the outer circumference and the inner circumference of the axle 340 and connected with the field coil grounding unit 500, and a coil lead wire of the rotator 330 may be embedded in the driving shaft 230 and connected with the electricity-leading unit 400. This is for preventing the lead wires from twisting, because the field coil 320 rotates in the same direction as the axle 340 and the rotator 330 rotates in the same direction as the driving shaft 230. The electricity-generating unit 400 and the field coil grounding unit 500 have a configuration for maintaining a contact point from the rotator, which is described below.

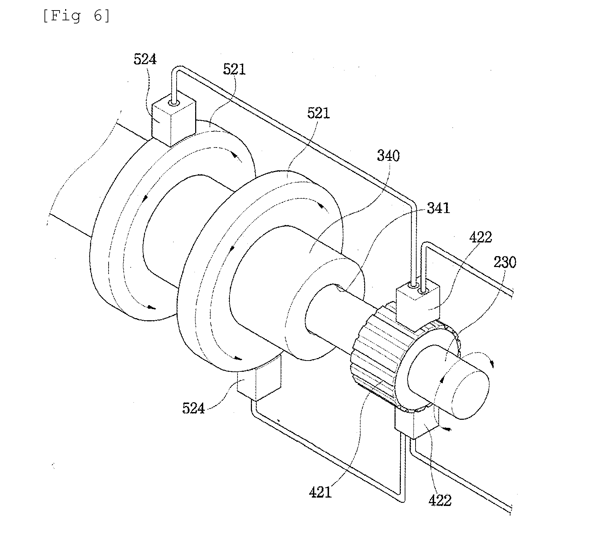

FIG. 6 is a side cross-sectional view showing an embodiment of an electricity-leading unit for leading direct current and a field coil grounding unit of the power generator using load applied to a tire according to the present invention. Since the current led by the electric generator 300 is alternating current, the electricity-leading unit 400 converts and leads the alternating current into direct current and the field coil grounding unit 500 supplies the exciting current converted into the direct current to the field coil. It is preferable that an axle 340 having a hole 341 through the center is formed and the driving shaft 230 extends outward while passing through the wheel 20 and the axle 340 such that the driving shaft 230 can pass through the center of the wheel 20 in order to convert the alternating current into direct current and lead electricity according to the present invention, as described in the figures. Further, the electricity-leading unit 400 further includes a housing 410 fixed to the chassis, a terminal 430 formed on the outer circumference of the housing 410 to lead electricity, a rectifier 421 fixed to the driving shaft 230 in the housing 410, and an electricity-leading portion 420 formed of a brush 422 connected with the terminal 430 and grounded to the rectifier 421. The field coil grounding unit 500 for supplying exciting current to the field coil includes a housing 510 fixed to the chassis while covering the outer circumference of the axle 340, a terminal 530 formed on the outer circumference of the housing 510 to supply exciting current, a slip ring 521 fixed to the axle 340 in the housing 510, and a grounding portion 520 formed of a brush 522 connected to the terminal 530 and grounded to the slip ring 521.

According to the structure described above, the alternating current is converted into direct current by the rectifier 421 and the brush 422 of the electricity-leading unit 400, the converted direct current is transmitted to a capacitor or other devices, and some of the direct current can be supplied as direct exciting current to the field coil by the slip ring 521 and the brush 522 of the field coil grounding unit 500.

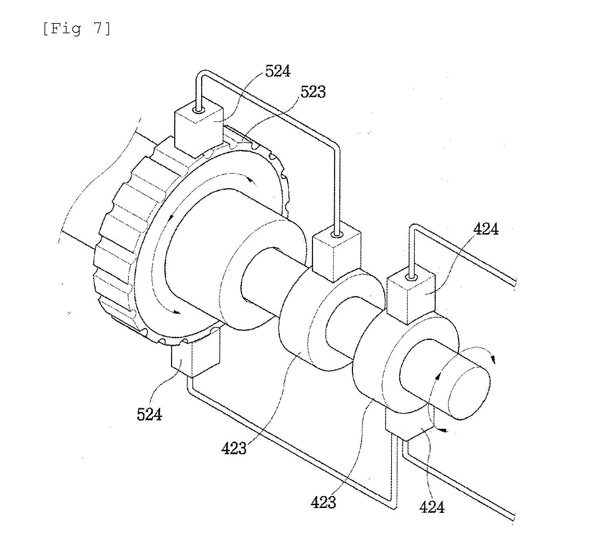

FIG. 7 is a side cross-sectional view showing an embodiment of an electricity-leading unit for leading alternating current and a field coil grounding unit of the power generator using load applied to a tire according to the present invention. As shown in the figure, in order to lead direct current, the axle 340 having the hole 341 through the center such that the driving shaft 230 can pass is disposed in the center of the wheel 20, the driving shaft 230 extends outward through the wheel 20 and the axle 340, and the electricity-leading unit 400 further includes the housing 410 fixed to the chassis, the terminal 430 formed on the outer circumference of the housing 410 to lead electricity, a slip ring 423 fixed to the driving shaft 230 in the housing 410, and a brush 424 connected to the terminal 430 and grounded to the slip ring 423. In order to supply exciting current to the field coil 320, the field coil grounding unit is composed of the housing 510 fixed to the chassis while covering the outer circumference of the axle 340, the terminal 530 formed on the outer circumference of the housing 510 to supply exciting current, the rectifier 523 fixed to the axle 340 in the housing 510, and the brush 524 connected to with the terminal 530 and grounded to the rectifier 523.

According to the structure described above, it is possible to lead alternating current without conversion and transmit the alternating current to the capacity or the other devices, using the slip ring 423 and the brush 424 of the electricity-leading unit 400, while some of the alternating current can be converted into direct current by the rectifier 523 and the brush 524 of the field coil grounding unit 500, thereby transmitting direct exciting current to the field coil.

The embodiment described above is provided to describe the present invention in detail and the present invention is not limited thereto and may be modified in various ways within the scope and the equivalent range. Accordingly, the scope of the present invention is not limitedly construed by claims.

### [Industrial Applicability]

The present invention can be used for all transportation driven by common tires, and can be used for, in addition to common vehicle, specific vehicles, such as electric vehicles, hybrid vehicles, container vehicles, forklift trucks, shovelers, and bulldozers, and tractors, electric carriers, golf cars, and electric bicycles, such that the industrial applicability is very high.

## Claims

1. A power generator using load applied to a tire, comprising:
a tire 10 having diaphragms 110 formed diagonally to a moving direction of the tire 10 and compartments 120 defined by the outer circumference of a wheel 20, the inner wall of the tire, and the diaphragm 120 to separately accommodate fluid, in the tire;
hydraulic ejection hoses 140 transmitting fluid from the compartments 120 into a hydraulic driving apparatus 200 and hydraulic suction hoses 140 transmitting the fluid from the hydraulic driving apparatus 200 into the compartments, the hydraulic hoses equipped with a check valve, respectively, and fastened to the wheel 20 for the compartments and a housing 210 of the hydraulic driving apparatus;
the hydraulic driving apparatus 200 including housing 210 mounted to an electricity generator 300 inside the wheel 20, a driving gear 220 generating torque while rotating opposite to the tire by means of the fluid ejected from the hydraulic ejection hoses 130 at the center in the housing 210, a driving shaft 230 extending from the center of the driving gear to transmit torque from the driving gear to the electricity generator 300, and a plurality of driven gears 240 engaged with the driving gear 220 to transmit force of the fluid therein;
fluid filled in the compartments 120, the hydraulic ejection hoses 130, the hydraulic suction hoses 140, and the hydraulic driving apparatus 200;
the electricity generator 300 including a housing 310 mounted inside the wheel 20 to be fixed thereto, a field coil 320 fixed inside the housing 310 and generating magnetic force while rotating in the same direction as the tire, and a rotator 330 generating electricity while rotating in the opposite direction to the tire by means of the driving shaft 230, at the center of the housing 310; and
an electricity-leading unit leading electricity generated from the electricity generator 300,
wherein electricity is generated by the load of the vehicle when the tire rotates.

2. The power generator using load applied to the tire according to claim 1, wherein the compartment has the outer structure constructed by connection points at the middle portion of the with of the diaphragms 110 formed diagonally to the moving direction of the tire, connection points on the outer circumference of the wheel 20, and connection points on the inner wall of the tire, and is formed in a tub shape made of a hermetic material equipped with connection portions for the hydraulic ejection hoses and the hydraulic suction hoses.

3. The power generator using load applied to the tire according to claim 1, wherein in order to lead direct current from the electricity generator 300, an axle 340 having a hole 341 through the center such that the driving shaft 230 can pass is disposed in the center of the wheel 20, the driving shaft 230 extends outward through the wheel 20 and the axle 340, and the electricity-leading unit 400 further includes a housing 410 fixed to the chassis, a terminal 430 formed on the outer circumference of the housing 410 to lead electricity, a rectifier 421 fixed to the driving shaft 230 in the housing 410, and a brush 424 connected to the terminal 430 and grounded to the rectifier 421.

4. The power generator using load applied to the tire according to claim 3, further comprising a field coil grounding unit 500 that includes a housing 510 fixed to the chassis while covering the outer circumference of the axle 340, a terminal 530 formed on the outer circumference of the housing 510 to supply exciting current, a slip ring 521 fixed to the axle 340 in the housing 510, and a brush 524 connected to with the terminal 530 and grounded to the flip ring 521, in order to supply exciting current to the field coil 320.

5. The power generator using load applied to the tire according to claim 1, wherein in order to lead alternating current from the electricity generator 300, an axle 340 having a hole 341 through the center such that the driving shaft 230 can pass is disposed in the center of the wheel 20, the driving shaft 230 extends outward through the wheel 20 and the axle 340, and the electricity-leading unit 400 further includes a housing 410 fixed to the chassis, a terminal 430 formed on the outer circumference of the housing 410 to lead electricity, a slip ring 423 fixed to the driving shaft 230 in the housing 410, and a brush 424 connected to the terminal 430 and grounded to the slip ring 423.

6. The power generator using load applied to the tire according to claim 3, further comprising a field coil grounding unit 500 that includes a housing 510 fixed to the chassis while covering the outer circumference of the axle 340, a terminal 530 formed on the outer circumference of the housing 510 to supply exciting current, a rectifier 523 fixed to the axle 340 in the housing 510, and a brush 524 connected to with the terminal 530 and grounded to the rectifier 523, in order to supply exciting current to the field coil 320.
